# EUROPÄISCHE PATENTSCHRIFT

(11) **EP 3 265 267 B1**
(45) Veröffentlichungstag und Bekanntmachung des Hinweises auf die Patenterteilung: **27.05.2020**
(21) Anmeldenummer: 16708627.1
(22) Anmeldetag: 29.02.2016
(51) Int. Cl.: B23K 26/38, B23K 26/04

(54) **INITIALE ABSTANDSEINNAHME FÜR DIE LASERBEARBEITUNG**
ASSUMING INITIAL DISTANCE FOR LASER MACHINING
PRISE EN COMPTE DE LA DISTANCE INITIALE POUR L'USINAGE AU LASER

(30) Priorität: 03.03.2015 DE 102015103047
(43) Veröffentlichungstag der Anmeldung: 10.01.2018
(73) Patentinhaber: Trumpf Laser- und Systemtechnik GmbH, 71254 Ditzingen (DE)
(72) Erfinder: HAGENLOCHER, Tobias, 71254 Ditzingen (DE)
(74) Vertreter: Grättinger Möhring von Poschinger Patentanwälte Partnerschaft mbB
(86) Internationale Anmeldenummer: PCT/EP2016/054218
(87) Internationale Veröffentlichungsnummer: WO 2016/139177

(56) Entgegenhaltungen:
- DE-B3-102011 003 395
- US-A1- 2009 183 612

## Beschreibung

Die vorliegende Erfindung betrifft ein Verfahren zur initialen Abstandseinnahme beispielsweise bei Laserschneidvorgängen und insbesondere ein Verfahren zum Anfahren eines Startpunkts eines Trennschnitts, beispielsweise eines Besäumschnitts, mit einem Bearbeitungskopf. Ferner betrifft die Erfindung eine Laserbearbeitungsanlage zur Durchführung derartiger Verfahren.

Eine effiziente initiale Abstandseinnahme ist insbesondere bei Hotforming-Werkstücken einsetzbar, welche einen oder mehrere Naturkantenabschnitte aufweisen. Naturkanten sind insbesondere Kanten, welche durch eine exaktere Maßhaltigkeit beim Umform- bzw. Tiefziehprozess oder aus konstruktiven Gründen keine weitere Bearbeitung erfordern. Entsprechend können bei Hotforming-Werkstücken umlaufende Besäumschnitte entfallen, stattdessen sind nur einzelne Kantenabschnitte einer Kontur mit einem räumlich beschränkten Besäumschnitt zu bearbeiten. Da der Startpunkt eines solchen Konturschnitts auf der Werkstückkante liegt, bzw. der Lasereinschaltpunkt sogar außerhalb des Werkstücks liegt, muss vor dem Schnitt die Blechlage ermittelt werden. Je mehr Abschnitte zu bearbeiten sind, desto mehr Zeit wird für das Vermessen und Anfahren der Startpunkte der Schneidvorgänge anfallen.

Es sind Verfahren bekannt, bei denen die Lage eines Laserbearbeitungskopfes zum Werkstück möglichst nah am Startpunkt eines Laserschneidvorgangs stationär vermessen und anschließend angepasst wird. Die Messung wird bei einer nachfolgenden Positionierung des Bearbeitungskopfes am Laseranschaltort berücksichtigt. Ein derartiges diskontinuierliches Positionieren des Bearbeitungskopfes kann zeitlich aufwändig sein.

Ferner offenbart WO 2012/104053 A1 (DE 10 2011 003395 B3) ein Verfahren zum Abtrennen eines Randabschnitts mittels eines Lasertrennschnitts, der aus mehreren Einzeltrennschnitten gebildet wird. Die Parameter der jeweiligen Startpunkte der Einzeltrennschnitte werden unter Einbezug des jeweils vorhergehenden Trennschnitts bestimmt. Für einen Einzeltrennschnitt wird der Laserschneidkopf in eine definierte Startposition bewegt, die einer Bearbeitungsposition des Laserschneidkopfs bei Ausführen des jeweils zuvor ausgeführten Einzeltrennschnitts entspricht. Zur Positionierung des Schneidkopfs in der Startposition werden die in dem Zwischenspeicher des Datenspeichers zwischengespeicherten Ortskoordinaten des Laserschneidkopfs als Ortskoordinaten der Startposition verwendet. Der Laserschneidkopf wird entlang einer definierten Bewegungsbahn zu der Startposition bewegt. Die Bewegungsbahn wird be vorzugt mittels im Zwischenspeicher des Datenspeichers gespeicherten Abstandsmesswerte definiert, die während des jeweils zuvor ausgeführten Einzeltrennschnitts von einer Abstandsmesseinrichtung gewonnen wurden. In der Startposition werden die im Zwischenspeicher des Datenspeichers abgespeicherten Steuerungszustände des Laserschneidkopfs in der Bearbeitungsposition des jeweils zuvor ausgeführten Einzeltrennschnitts wiederhergestellt und nachfolgend der nächste Einzeltrennschnitt ausgeführt.

Ferner offenbart US 2009/183612 A1 eine Schneidemaschine, die die Sicherheit eines Arbeiters während der Bewegung eines Kopfes sicherstellt. Dabei wird ein Schneidkopf mit unterschiedlichen Geschwindigkeiten in Abhängigkeit der Position eines Arbeiters bezüglich des Schneidvorgangs bewegt.

Einem Aspekt dieser Offenbarung liegt die Aufgabe zugrunde, eine effiziente Einnahme einer Startposition eines Laserbearbeitungskopfes für einen Laserbearbeitungsvorgang zu ermöglichen. Insbesondere liegt einem weiteren Aspekt die Aufgabe zugrunde, ein Verfahren für eine effiziente Einnahme einer Startposition eines Laserbearbeitungskopfes für einen abschnittsweisen Besäumschnitt anzugeben. Allgemein liegt den hierein vorgeschlagenen Konzepten die Aufgabe zugrunde, insbesondere bei Trenn- und Besäumschnitten schnell eine Werkstück-Ist-Lage für einen robusten Bearbeitungsprozess anfahren zu können.

Zumindest eine dieser Aufgaben wird gelöst durch ein Verfahren nach Anspruch 1 und durch eine Werkzeugmaschine nach Anspruch 9. Weiterbildungen sind in den Unteransprüchen angegeben.

In einem Aspekt wird ein Verfahren zum Anfahren einer in einem Arbeitsabstand von einer Oberfläche eines Werkstücks vorgesehenen Startposition für eine Laserbearbeitung mit einem eine Abstandssensorik aufweisenden Laserbearbeitungskopf offenbart, wobei der Laserbearbeitungskopf einen an einer Werkstückkante des Werkstücks beginnenden Konturbeschnitt des Werkstücks bewirken soll. Das Verfahren umfasst die folgenden Schritte:
Bereitstellen von Ortsinformation bezüglich der Startposition und von Rauminformation bezüglich eines vorbestimmten Eingangsbereichs, der sich zumindest teilweise in einem Abstand zur Oberfläche des Werkstücks erstreckt, der größer ist als der Arbeitsabstands, und der von der Startposition eine Mindestentfernung aufweist, die ein Anpassen des Abstands des Laserbearbeitungskopfes auf den Arbeitsabstand während eines Bewegens des Laserbearbeitungskopfes von dem Eingangsbereich zur Startposition ermöglicht,
Bewegen des Laserbearbeitungskopfes durch den Eingangsbereich in Richtung Startposition und Aktivieren einer auf der Abstandssensorik basierenden Abstandsregelung nach Eintritt des Laserbearbeitungskopfes in den Eingangsbereich,
Fortsetzen des Bewegens des Laserbearbeitungskopfes vom Eingangsbereich zur Startposition unter Anpassung des Abstands des Laserbearbeitungskopfes vom Werkstück auf den Arbeitsabstand durch die Abstandsregelung (wobei insbesondere der Laserbearbeitungskopf die Startposition im Arbeitsabstand passiert),
Fortsetzen des Bewegens des Laserbearbeitungskopfes zur Werkstückkante und über die Werkstückkante hinaus, wobei ein Deaktivieren der auf der Abstandssensorik basierenden Abstandsregelung und ein Aktivieren einer Abstandseinfrierung vor Passieren der Werkstücckante durchgeführt wird (wobei insbesondere das Deaktivieren der auf der Abstandssensorik basierenden Abstandsregelung und das Aktivieren einer Abstandseinfrierung an der Startposition durchgeführt wird),
Einschalten einer Laseremission aus dem Laserbearbeitungskopf,
Zurückbewegen des Laserbearbeitungskopfes zur Werkstückkante und über das Werkstück in Richtung Startposition, und
Passieren der Startposition mit dem Laserbearbeitungskopf im Arbeitsabstand unter Laseremission, wobei ein Reaktivieren der auf der Abstandssensorik basierenden Abstandsregelung und ein Deaktivieren der Abstandseinfrierung vor dem Passieren der Startposition oder an der Startposition durchgeführt werden.

In einem weiteren Aspekt weist eine Werkzeugmaschine eine Laserbearbeitungsanlage mit einem Lasersystem, eine Werkstückhalterung und einen eine Abstandssensorik aufweisenden Laserbearbeitungskopf auf. Der Laserbearbeitungskopf ist mit dem Lasersystem optisch verbunden. Ferner ist eine Relativbewegung zwischen dem Laserbearbeitungskopf und der Werkstückhalterung zur Durchführung eines in der Nähe einer Werkstückkante des Werkstücks beginnenden Konturbeschnitts des Werkstücks bewirkbar. Die Werkzeugmaschine weist ferner eine Steuerungseinheit zur Durchführung eines Verfahrens zum Anfahren einer in einem Arbeitsabstand von einer Oberfläche eines Werkstücks vorgesehenen Startposition für eine Laserbearbeitung mit dem Laserbearbeitungskopf gemäß obigem Verfahren auf.

Die hierin offenbarten Konzepte basieren auf der Erkenntnis, dass eine partielle, d.h. abschnittsweise, Bearbeitung des Werkstücks einen robusten, reproduzierbaren und sicheren Prozess für das "Anfahren" des Werkstücks mit dem Bearbeitungskopf erfordert. Insbesondere ist es gemäß dieser Konzepte möglich, eine Blechlage mit ausreichender Präzision hinsichtlich der Lage des Bearbeitungskopfes "on the fly" (d.h., während einer mehrdimensionalen Bewegung des Bearbeitungskopfes) zu detektieren, um anschließend den Besäumschnitt mit den eingestellten Prozessparametern durchführen zu können.

Die hierin offenbarten Konzepte können es erlauben, beim Anfahren einer Schneidstartposition eine Blechlage ohne einen Stillstand der Maschinenachsen, und damit ohne Stillstand des Bearbeitungskopfes, beispielsweise mittels kapazitiver Abstandssensorik aufzunehmen. So kann beim Bewegen des Bearbeitungskopfes auf die Startposition des Besäumschnitts die Werkstück-Ist-Lage ohne Stillstand der Hauptmaschinenachsen mittels kapazitiver Abstandssensorik detektiert werden.

In einigen Ausführungsformen wird ein Prozessstartpunkt bezüglich der ungefähren Werkstücklage definiert, an dem der Bearbeitungskopf vorbeibewegt wird. Beispielsweise wird an dem Prozessstartpunkt eine Toleranzraumkugel mit z.B. 2 mm Radius aufgespannt. Beim Anfahren des Prozessstartpunkts wird mit dem Eintreten der Hauptmaschinenachsen in diese Toleranzkugel eine anfangs zurückgezogene dynamische Abstandsachse synchron zur Bewegung auf einen Punkt im Bereich des Schnittbeginns mit einer Bewegung entlang der dynamischen Abstandsachse mithilfe der Abstandsregelung auf den vorgegebenen Schneidabstand gefahren. Da die Kantenposition des Werkstücks Toleranzen unterliegt, wird hin zur Startposition des Besäumschnitts ein Verfahrsatz (Bewegungssequenz) über die Werkstückkante hinaus ausgeführt. So wird sichergestellt, dass ein Besäumschnitt immer bis zur Werkstückkante reicht und nicht erst im Werkstück beginnt. Da das Messmittel für die Abstandsregelung vom Werkstück entfernt wird, wird die Abstandsregelung während des Verfahrsatzes eingefroren, d.h. es findet keine Synchronisation der Hauptmaschinenachsen mit einem Abstandsmessergebnis statt.

Im Vergleich mit diskontinuierlichen Anfahrkonzepten können die hierein offenbarten Konzepte pro Anfahrt eines Besäumschnitts beispielsweise Bruchteile von Sekunden einsparen. Bei Werkstücken, bei denen mehrfach angefahren wird, kann die Zeitersparnis entsprechend kumulieren, so dass je nach Situation mehrere Prozente der Bearbeitungszeit im Vergleich mit diskontinuierlichen Anfahrkonzepten eingespart werden kann. Insofern betreffen die hierein beschriebenen Konzepte insbesondere die Bearbeitung von Werkstücken, bei denen ein oder mehrere Besäumschnitte vorzunehmen sind.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische räumliche Darstellung einer Werkzeugmaschine,
- Fig. 2: eine schematische Darstellung eines Anfahrweges bei der Einleitung eines Trennschnitts,
- Fig. 3: eine schematische Darstellung eines Anfahrprozess bei der Einleitung eines Besäumschnitts und
- Fig. 4: ein schematisches Flussdiagramm zur Verdeutlichung eines beispielhaften Ablaufs bei der initialen Abstandseinnahme.

Hierin beschriebene Aspekte basieren zum Teil auf der Erkenntnis, dass eine Integration des Prozess der Abstandseinnahme in den einem Trennschnitt vorausgehenden Bewegungsablauf wertvolle Zeit einsparen kann. Ferner wurde erkannt, dass eine geeignete Wahl von zu durchlaufenden Positionen es ferner erlauben kann, auch trotz evtl. auftretende Fluktuationen in den Ausmaßen eines Werkstücks im Rahmen einer Werkstücktoleranz eines genaues Anfahren einer Startposition zu ermöglichen.

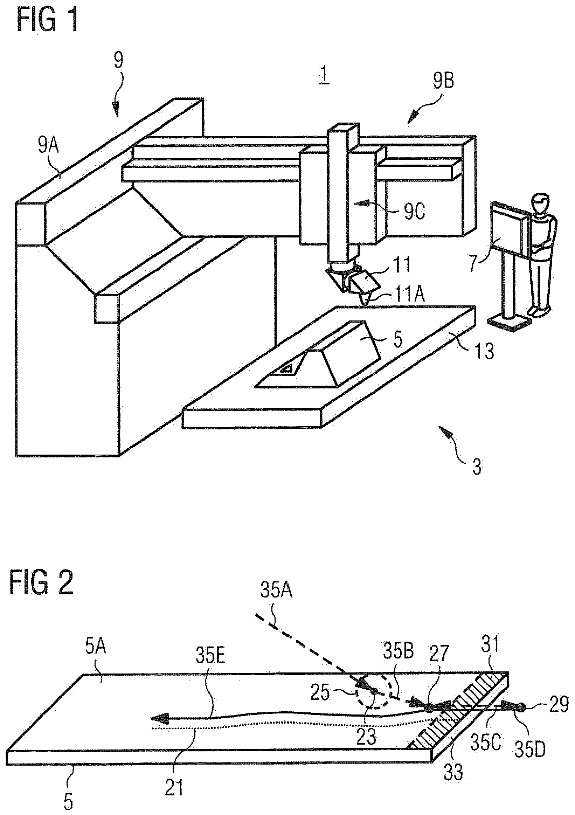

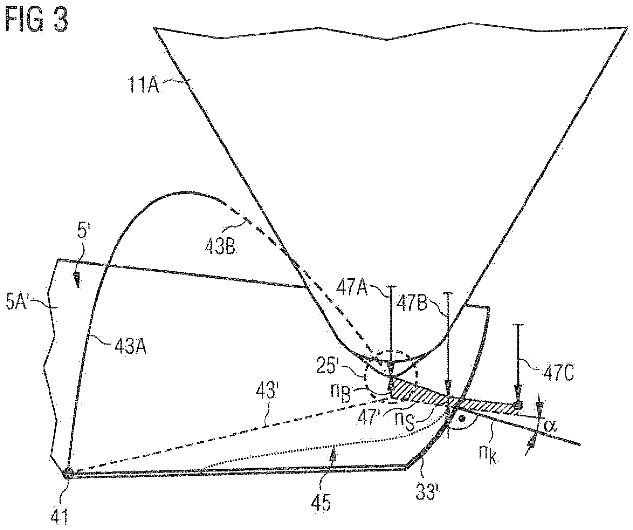

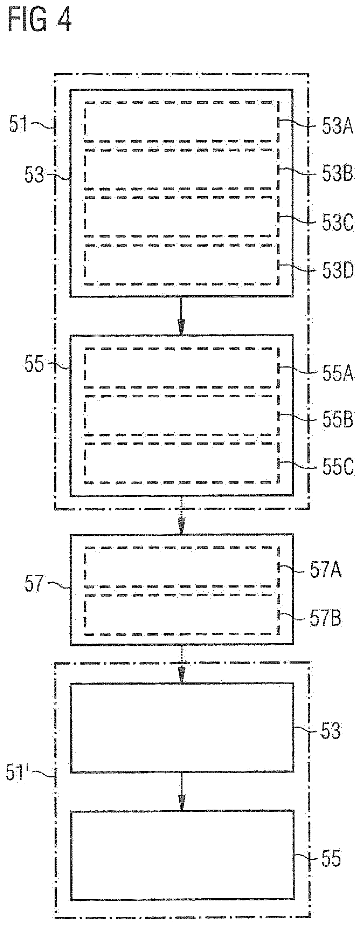

Im Folgenden wird in Verbindung mit Fig. 1 eine beispielhafte Werkzeugmaschine basierend auf einer Laserbearbeitungsanlage beschrieben, bei der das hierein offenbarte Konzept des Anfahrens eines Konturbeschnitts eingesetzt werden kann. Anschließend wird unter Bezugnahme auf die schematischen Darstellungen der Figuren 2 und 3 sowie auf das Flussdiagramm der Fig. 4 die Bewegung eines Bearbeitungskopfes verdeutlicht.

In Fig. 1 ist eine Werkzeugmaschine 1 mit einer Laserbearbeitungsanlage 3 als Grundmaschine für die Bearbeitung eines Werkstücks 5 dargestellt. Die Bedienung der Werkzeugmaschine 1 erfolgt über ein Bedienpult 7 eines Steuerungssystems (nicht explizit dargestellt). Beispielsweise können über die Erstellung und die Einstellung von NC-Programmen am Bedienpult 7 spezifische auf Werkstücke und deren Bearbeitung abgestimmte Arbeitsabläufe vorgenommen werden. Beispielsweise weist die Werkzeugmaschine 1 einen Schaltschrank mit dem Steuerungssystem auf, in der eine zugehörige CNC-Steuerung, eine elektrische Versorgung von Antrieben sowie allgemein Logik- und Leistungsteile vorgesehen sind.

Ein nicht explizit in Fig. 1 gezeigtes Lasergerät der Laserbearbeitungsanlage 3 dient der Erzeugung von Laserstrahlung und kann beispielsweise auf einem Festkörperlaser wie einem Scheibenlaser oder Faserlaser oder einem Gas-Laser wie einem CO2-Laser basieren. Über Laserlichtkabel und/oder Spiegel kann die Strahlführung vom Lasergerät zur Werkstück erfolgen. Weitere Komponenten der Werkzeugmaschine 1 umfassen beispielsweise einen Rotationswechsler zum Halten des zu bearbeitenden Werkstücks 5 und zum leichten Entnehmen von bearbeiteten Werkstücken, einen Kompaktentstauber zur Absaugung von Rauchgasen und Schwebeteilchen aus dem Innenraum, einen Schrottförderer sowie Elemente für die Pneumatik, für die Schneid- und Schweißgasversorgung sowie für die Zentralschmierung.

Ein durch die CNC-Steuerung kontrollierter Arbeitsablauf erlaubt die Bearbeitung des Werkstücks 5 auf eine vorbestimmte Art und Weise unter Zusammenwirken der verschiedensten Komponenten der Laserbearbeitungsanlage 3. So kann nacheinander ein Arbeitsablauf wiederholt durchgeführt und eine große Anzahl von Werkstücken kann effizient und im Wesentlichen gleich - trotz eventueller Variation in den Maßen aufgrund von Toleranzbereichen - bearbeitet werden.

Ein Programmierer erstellt das NC-Programm zum jeweiligen Fertigungsauftrag innerhalb eines Programmiersystems am Computer, d.h. beispielsweise am Bedienpult 7 des Steuerungssystems. Den Weg des Lasers kann das Steuerungssystem automatisch oder unter Einflussnahme des Bedieners berechnen. Das Steuerungssystem kann die Bearbeitungsfolge festsetzen, Anfangsschnittpunkte an die richtigen Stellen setzen, spitze Ecken abrunden lassen oder Besäumschnitte vorsehen. Dabei kann das Steuerungssystem die Strategien umsetzen, die der Programmierer werkstückspezifisch ausgewählt hat. In einer vorbereitenden Simulation kann der Programmierer sehen, wie das NC-Programm abgearbeitet wird.

Damit die Schnittqualität stimmt, liefert das NC-Programm der Steuerung die passenden Werte für Bearbeitungsparameter wie Schneidgeschwindigkeit, Laserleistung und Düsenabstand. Diese Werte stehen in so genannten Technologietabellen, auf die die Steuerung zugreifen kann. Ferner umfassen die Bearbeitungsparameter werkstückspezifische Parameter wie Toleranzgrenzen von (z.B. Blech-)Kanten und maximal mögliche Bewegungsgeschwindigkeiten des Bearbeitungskopfes relative zum Werkstück und/oder sowie die Geschwindigkeit bei der Abstandsanpassung.

Fig. 1 zeigt ferner schematisch den Aufbau der Laserbearbeitungsanlage 3, welche sich beispielsweise im Innenraum einer Schutzkabine befindet. Die Laserbearbeitungsanlage 3 weist eine Bewegungseinheit 9 mit funktionsrelevanten Bauteilen wie X-, Y- und Z- Schlitten 9A, 9B, 9C zur Bewegung von Strahlführungs- und Medienzuführungskomponenten relativ zum Werkstück 5 auf.

Allgemein können die Strahlführungskomponenten Laserlichtkabel, eine Z-Pinole, eine Kollimationsoptik und eine Bearbeitungsoptik zum Leiten und Fokussieren des Laserstrahls auf das Werkstück 5 umfassen. Die Bearbeitungsoptik ist üblicherweise in einem Bearbeitungskopf 11 mit einer Düse 11A vorgesehen. Der Bearbeitungskopf 11 kann, beispielsweise durch weitere Dreh- und Schwenkachsen, im Wesentlichen frei im Raum positioniert und ausgerichtet werden, und so den austretenden Laserstrahl gezielt über das Werkstück 5 führen. Weitere, insbesondere redundante, Achsen können ein schnelles Einstellen der Position und Ausrichtung des Bearbeitungskopfes 11 zum Werkstück 5 verbessern. Der Bearbeitungskopf 11 - im Fall des Laserschneidens auch als Schneidkopf bezeichnet - macht den Laserstrahl mit Linsen- oder Spiegel-basierten Fokussieroptiken zum Schneidwerkzeug. Der Laserstrahl tritt über die Düse 11A beispielsweise zusammen mit einem Schneidgas aus dem Bearbeitungskopf 11. Der Abstand zum Werkstück 5 kann im Beriech von 0,5 mm bis 2 mm, beispielsweise im Bereich von 0,7 mm bis 1,2 mm, liegen.

In der beispielhaften Ausführung der Bewegungseinheit kann der Bearbeitungskopf 11 in einem durch die X-, Y- und Z- Schlitten 9A, 9B, 9C sowie durch die Beweglichkeit der Z-Pinole bestimmten Bereich jede einstellbare Position und Orientierung einnehmen. Den X-, Y- und Z- Schlitten 9A, 9B, 9C sind Antriebseinheiten zugeordnet, die es erlauben, eine Relativbewegung des Bearbeitungskopfs 11 bezüglich des Werkstücks 5 durchzuführen. Die Ausrichtung des Bearbeitungskopfes 11 zum Werkstück 5 erfolgt durch die Dreh- und Schwenkachsen. Daraus ergibt sich ein Arbeitsraum, der alle Punkte umfasst, die durch den entsprechend fokussierten austretenden Laserstrahl bearbeitbar sind.

Das Werkstück 5 kann mit einer Spanntechnik (nicht gezeigt) ortsfest auf einer Werkstücklagerungsvorrichtung 13 gelagert sein. In alternativen Ausführungsformen ist auch das Werkstück 5/die Werkstücklagerungsvorrichtung 13 oder nur das Werkstück 5/die Werkstücklagerungsvorrichtung 13 im Raum bewegbar. Die hierein vorgenommenen Konzepte sind entsprechend angepasst auch in derartigen Konfigurationen einsetzbar.

Zur Werkstücklagerungsvorrichtung 13 gehören in der Regel weitere Elemente wie Spanner zum Einspannen des Werkstücks 5 sowie Sensoren für die Bauteilerkennung und Antriebe zum Verfahren/Bewegen der Werkstücklagerungsvorrichtung 13.

Allgemein sind umgeformte Blechteile ein Beispiel für ein dreidimensional, variabel geformtes Werkstück 5. Das Werkstück 5 ist beispielsweise ein warmumgeformtes Strukturteil für ein Kraftfahrzeug, z.B. eine B-Säule. Ferner kann das Werkstück beispielsweise auch ein Tiefziehbauteil oder als Platte ausgebildet sein, d.h. sich im Wesentlichen in einer Ebene erstrecken. Ebenso ist auch ein Rohr oder ein stangenförmiges Werkstück möglich. Typische Werkstücke sind aus einem Metall, wie z.B. Stahl, Aluminium oder Kupfer, oder einer Metalllegierung. Ebenso sind aber auch Funktionskeramiken, Kunststoffe, organische Werkstoffe oder andere Werkstoffe möglich.

In beispielhaften Schneidvorgängen kann beim Laserschneiden mit dem Laserstrahl ein Randbereich des Werkstücks 5 nachbearbeitet werden, d.h., es kann ein sogenannter Besäumschnitt als Beispiel eines Trennschnitts vorgenommen werden. Dazu wird bei aktiviertem Laserstrahl der Bearbeitungskopf 11 von außerhalb des Werkstücks 5 auf dieses zu bewegt, wobei mit Erreichen der Kante des Werkstücks der Schneidvorgang einsetzen kann. Die Schnittkante soll üblicherweise vorgegebene Qualitätsansprüche erfüllen, welche durch die Einhaltung vorbestimmter Bearbeitungsparameter erreicht werden können. Dazu werden der Laserstrahl/der Bearbeitungskopf 11 und das Werkstück 5 relativ zueinander bewegt, sodass auf einer Bearbeitungsbahn (z.B. ein Konturbeschnitt) ein durchgängiger Schnittspalt im Werkstück erzeugt werden kann. D.h. der Laserstrahl hat das Werkstück 5 entlang dem Konturbeschnitt durchtrennt. Auf diese Weise können z.B. Randabschnitte an Naturkanten des Werkstücks 5 aufbereitet und/oder die Außenmaße des Werkstücks 5 an Sollwerte angepasst werden.

Beim Schneiden muss der Abstand zwischen Schneiddüse 11A und Werkstück 5 möglichst genau auf einen Sollwert (hierin auch als Arbeitsabstand bezeichnet) geregelt werden, damit der Fokus während des Schneides durchgehend optimal bezüglich der Materialoberfläche liegt und das Schneidgas optimal in den Schnittspalt strömen kann. Da schon geringe Abweichungen im Abstand das Schneidergebnis beeinflussen können, wird der Arbeitsabstand, also der Abstand zwischen der Schneiddüse 11A und dem Werkstück 5, üblicherweise durch eine aktive Sensorik überwacht und kontinuierlich nachgeregelt. Die Sensorik misst dazu allgemein den Abstand zwischen Schneiddüse 11A und Werkstück 5 fortlaufend. Zum Nachregeln des Abstands entlang einer sogenannten dynamischen Achse kann beispielsweise der gesamte Bearbeitungskopf 11 nachgeführt werden oder nur sein vorderer Teil mit beispielsweise Objektiv und Schneiddüse 11A aus- und eingefahren werden. Der vorzunehmende Arbeitsabstand kann in Abhängigkeit der jeweiligen Bearbeitungsverfahren und Lasersystem variieren. Z.B. erfordert Schmelzschneiden einen geringen Abstand im Millimeterbereich, um beispielsweise das Schneidgas in den Schnittspalt einströmen zu lassen.

Für eine Bewegung des Bearbeitungskopfes 11 in einem festen Abstand zur Oberfläche des Werkstücks 5 kann der Bearbeitungskopf 11 beispielsweise einen Abstandssensor aufweisen, dessen Ausgangssignal einer Abstandsregelung zugeführt wird. Die Abstandsregelung wird üblicherweise als Teil der Steuerungseinheit der Laserbearbeitungsanlage 3 ausgebildet. In einigen Ausführungsformen kann der Bearbeitungskopf 11 als Ganzes oder zumindest teilweise entlang einer eigens für die Abstandsregelung vorgesehenen dynamischen Achse bewegt werden, um den erforderlichen Abstand kontinuierlich zu gewährleisten. Ist entsprechend die Abstandsregelung aktiviert, bewegt sich der Bearbeitungskopf 11 im vorbestimmten Arbeitsabstand über die Werkstückoberfläche.

Eine beispielhafte Abstandsregelungstechnologie ist beispielsweise aus der DE 10 2010 039 528 A1 bekannt. Bei metallischen Werkstoffen kann ein Sensor die elektrische Kapazität zwischen z.B. dem zu bearbeitenden Blech und der Düse 11A messen. Da sich die Kapazität verändert, wenn der Spalt zwischen Blech und Düse größer oder kleiner wird, kann der Sensor daraus den Abstand ermitteln. Wenn der Abstand nicht mit dem programmierten Wert übereinstimmt, bringt eine Steuerung den Schneidkopf wieder auf die richtige Höhe. Entsprechend hat der Schneidkopf durch die Abstandsregelung möglichst immer den optimalen Arbeitsabstand zum Werkstück.

Allgemein können Abstandsabweichungen der Schneiddüse 11A zur Werkstückoberfläche durch die Werkstückformgebung, Abweichungen der Form im Rahmen der Toleranz und durch Schwankungen in der Bewegung des Bearbeitungskopfes verursacht werden und durch eine derartige integrierte Abstandsregelung kompensiert werden.

Dem Hauptschneidvorgang geht ein Positionier- und Anschneidvorgang voraus. Ziel des Positionier- und Anschneidvorgangs ist es unter anderem, in einem Randbereich des Werkstücks 5 (in dem beispielsweise aus Gründen der Prozesssicherheit keine Abstandsregelung eingesetzt werden kann) sicherzustellen, dass zum Einen ein Besäumschnitt von der Werkstückkante bis zu einem mit einer Startposition des Bearbeitungskopfes 11 verknüpften Bearbeitungsposition, ab welcher der Einsatz der Abstandsregelung möglich ist, in genügender Qualität erreicht wird und zum anderen der Bearbeitungskopf 11 ab der mit der Startposition verknüpften Bearbeitungsposition im vorbestimmten Abstand beispielsweise im Konturbeschnitt das Werkstück 5 weiterbearbeiten kann (d.h., gemäß einem vorbestimmten Bearbeitungsweg über das Werkstück 5 hinweg bewegt werden kann). Ein derartiger Positionier- und Anschneidvorgang des Bearbeitungskopfes 11 bis zur Startposition 27 wird im Folgenden unter Bezugnahme auf die Figuren 2 bis 4 beschrieben.

Fig. 2 verdeutlicht den Bewegungsablauf des Bearbeitungskopfes 11 während des Positionier- und Anschneidvorgangs hinsichtlich der Durchführung eines Konturbeschnitts. In Fig. 2 ist der zugehörige Schnittverlauf 21 gepunktet dargestellt. Die Positionierung des Bearbeitungskopfes 11 umfasst zum einen Bewegungsabläufe, bei denen der Bearbeitungskopf 11 keinen Laserstrahl emittiert und die mit gestrichelten Pfeilen in Fig. 2 dargestellt sind. Zum anderen umfasst der Anschneidvorgang Bewegungsabläufe, bei denen die Laserstrahlemission eingeschalten ist und die entsprechend mit durchgezogenen Pfeilen in Fig. 2 dargestellt sind.

In Fig. 2 erkennt man das Werkstück 5, dargestellt als beispielsweise ebenes Blech. Bezüglich einer Oberfläche 5A des Werkstücks 5 sind in Fig. 2 schematisch drei Punkte eingezeichnet: ein Bezugspunkt 23 beispielhaft im Inneren eines Eingangsbereichs 25, eine Startposition 27 im Arbeitsabstand über der Oberfläche 5A des Werkstücks 5 und ein Umkehrpunkt 29.

Die Dimensionierung und Ausgestaltung eines Bearbeitungskopfes 11 und der ideale Abstand zwischen dem Werkstück 5 und dem Bearbeitungskopf 11 können sich je nach Maschinentyp und Bearbeitungsfall stark unterscheiden. Jedem Bearbeitungskopf ist eine Wechselwirkungszone, üblicherweise der Fokuspunkt des Laserstrahls, zugeordnet, die in einem festem Abstand auf der Laserstrahlachse vor der Schneiddüse 11A liegt. Der für die Bearbeitung optimale Abstand ist somit erreicht, wenn die Wechselwirkungszone sich von der Werkstückoberfläche 5A aus in das Werkstück 5 erstreckt.

Der in Fig. 2 gezeigte Eingangsbereich 25 erstreckt sich als Kugel mit dem Bezugspunkt 23 als Mittelpunkt und einem definierten Durchmesser, beispielsweise zwischen 1 mm und 10 mm, insbesondere zwischen 2 mm und 5 mm. Der Bezugspunkt 23 befindet sich z.B. über einer angenommenen Soll-Lage der Werkstückoberfläche 5A, welche aufgrund von Lagerungs- und Werkstücktoleranzen von der realen Position der Werkstückoberfläche 5A abweichen kann. Der Eingangsbereich 25 ist derart gewählt, dass er sich zumindest teilweise in einem Abstand zur Oberfläche 5A des Werkstücks 5 erstreckt und vom Bearbeitungskopf 11 angefahren werden kann. Ferner liegt die Startposition 27 oberhalb der realen Werkstückoberfläche 5A. Wie in Fig. 2 beispielhaft angedeutet, befindet sich die Startposition 27 außerhalb eines Toleranzbereichs 31, der sich entlang einer Kante 33 des Werkstücks 5 erstreckt. Übliche Toleranzbereiche erstrecken sich über z.B. ± 5 mm oder kleiner bezüglich eines Sollkantenverlaufs. Allgemein befindet sich die Startposition möglichst nah an der Kante 33, beispielsweise in einem Abstand im Bereich von 10 mm bis 15 mm.

Die Ortsinformation bezüglich der Startposition 27 und die Rauminformation bezüglich des vorbestimmten Eingangsbereichs 25 kann beispielsweise über die Bedienkonsole 5 der Steuerungsvorrichtung bei der Programmierung eines NC-Programms ausgewählt und eingegeben werden.

Als Eingangsbereich 25 wird insbesondere eine Raumkugel um den Bezugspunkt 23 als Mittelpunkt gewählt, da so sichergestellt wird, dass der Anfahrkorridor des Bearbeitungskopfes 11 unabhängig vom vorhergehenden Bearbeitungsschritt immer dieselbe Länge hat, egal aus welcher Richtung der Bearbeitungskopf 11 anfährt.

Fig. 2 verdeutlicht ferner die verschiedenen Segmente der Bewegung des Bearbeitungskopfs 11. Ein erstes Bewegungssegment 35A entspricht einem Heranfahren des Bearbeitungskopfes 11 bis dieser in den vorbestimmten Eingangsbereich 25 eintritt. Nach dem Eintreten wird die Abstandsregelung aktiviert, die eine Bewegung zur Einnahme des Arbeitsabstands z.B. entlang der dynamischen Achse auslöst. Diese Abstandseinnahmebewegung wird mit dem nächsten Bewegungssegment 35B überlagert. Ausgehend von dem Eingangsbereich 25 bewegt sich somit der Bearbeitungskopf 11 entlang des Bewegungsabschnitts 35B zur Startposition 27. Die Länge des Bewegungsabschnitts 35B und/oder die Bewegungsgeschwindigkeit entlang des Verfahrweges sind derart ausgelegt, dass der Abstand des Bearbeitungskopfes 11 von der Oberfläche 5A auf den Arbeitsabstand eingestellt werden kann. In anderen Worten, Maschinenparameter werden üblicherweise bei der Bestimmung des Abstandes zwischen dem Eingangsbereich 25 und der Startposition 27, d.h. bei der Auswahl der Ortsinformation bezüglich der Startposition 27 und er Rauminformation bezüglich des vorbestimmten Eingangsbereichs 25, berücksichtigt.

Man erkennt in Fig. 2 das sich Annähern des zweiten Bewegungsabschnitts 35B an das Werkstück 5. Entsprechend passiert der Laserbearbeitungskopf 11 die Startposition 27 im Arbeitsabstand. Zur Verwendbarkeit der Abstandsregelung verläuft der Bewegungsabschnitts 35B bevorzugt kontinuierlich über dem Werkstück. Aussparungen und Löcher im Werkstück 5 werden zum Beispiel umfahren, so dass die Abstandsregelung erfolgen kann. Lässt sich dies nicht durchgehend gewährleisten, kann in solchen Bereichen die Abstandsregelung deaktiviert und mit eingefrorenem Abstand gefahren werden, wobei dies entsprechend in die Bestimmung der Mindestentfernung eingeht.

Nahe der Kanten kann die auf der Abstandssensorik basierende Abstandsregelung aus Gründen der Prozesssicherheit nicht mehr eingesetzt werden. Am Startpunkt 27 (allgemein vor der Kante) wird die Abstandsregelung deaktiviert und eine Abstandseinfrierung aktiviert. D.h. der Wert für die dynamische Achse wird nicht weiter geregelt und bleibt auf dem am Startpunkt 27 angenommenen Wert in der Maschinensteuerung gespeichert. Anschließend wird (ohne Pause) die Bewegung des Laserbearbeitungskopfes 11 zur Werkstückkante 33 fortgesetzt. Während der Abstandseinfrierung geschieht die Bewegung inkrementell, d.h. das Maß der Bewegung bezieht sich auf die zuletzt angefahrene Position des Bearbeitungskopfes (zu Beginn der Einfrierung der Startpunkt 27) und nicht auf das Maschinenkoordinatensystem. Der Verfahrweg erstreckt sich im Bewegungssegment 35C über die Werkstückkante 33 hinaus bis zum Umkehrpunkt 29. Entsprechend bewegt sich ab diesem Zeitpunkt der Bearbeitungskopf 11 ohne Reaktion auf Veränderungen in der Oberfläche 5A des Werkstücks 5. Allerdings kann aufgrund der Nähe zur Kante 33 davon ausgegangen werden, dass entlang des Bewegungssegments 35C keine größeren Variationen in der Oberfläche 5A auftreten, die zum Beispiel zu einer Beschädigung der Düse 11A führen könnten. Entsprechend ist in Fig. 2 der Bewegungsabschnitt 35C linear in gleichbleibendem Abstand zur Oberfläche 5A bzw. zu einer Extrapolation der Oberfläche 5A des Werkstücks 5 angedeutet.

Der Umkehrpunkt 29 ist beispielsweise derart gewählt, dass auch bei Eintreffen der maximal erlaubten Toleranz hinsichtlich der Größe des Werkstücks 5 der Bearbeitungskopf 11 sich nicht mehr oberhalb der zu bearbeitenden Oberfläche 5A des Werkstücks 5 befindet, d.h. dass der Laserstrahl beim Einschalten nicht auf die Oberfläche 5A treffen würde.

Im Bewegungsabschnitt 35D wird der Bearbeitungskopf zurück zur Werkstückkante 33 und über das Werkstück 5 in Richtung Startposition 27 bewegt. Dabei wird eine Laseremission aus dem Laserbearbeitungskopf 11 vor dem Passieren der Werkstückkante 33 eingeschaltet. Da aus Gründen der Zeitersparnis, der Bearbeitungskopf nur soweit über das Werkstück 5 hinaus fahren sollte, wie für ein prozesssicheres Zünden des Lasers notwendig ist, entspricht der Umkehrpunkt 29 zum Beispiel dem Einschaltpunkt des Lasers, wie in Fig. 2 gezeigt. Wie im Bewegungsabschnitt 35C findet im Bewegungsabschnitt 35D eine lineare Bewegung in Richtung Startposition 27 statt.

Sobald der Laserstrahl auf das Werkstück 5 trifft, bildet sich eine Schnittfuge aus. Aufgrund von einer eventuell noch nicht idealen Ausrichtung-/Abstandssituation des Bearbeitungskopfes 11 im Bewegungsabschnitt 35D kann die Qualität des Schnittes noch entfernt von der optimalen Sollqualität sein. Da der eingespeicherte Abstandswert der Startposition 27 jedoch nicht sehr stark vom realen Bauteil abweichen sollte, sollte die Qualität noch ausreichend sein. Beim Passieren der Startposition 27 wird die Abstandsregelung wieder aktiviert, sodass der Bearbeitungskopf 11 ab der Startposition 27 (Bewegungsabschnitt 35E) im Soll-Arbeitsabstand dem Konturbeschnitt 21 folgt, sodass in diesem Bereich der Schnitt mit der gewünschten Qualität stattfinden kann. Entsprechend werden beim Passieren der Startposition 27 ein Reaktivieren der auf der Abstandssensorik basierenden Abstandsregelung und ein Deaktivieren der Abstandseinfrierung durchgeführt.

Fig. 3 verdeutlicht den Bewegungsablauf anhand einer beispielhaften Werkstückbearbeitung eines Besäumschnitts. In der dreidimensionalen Darstellung erkennt man die Düse 11A zentral über einem Werkstück 5'. Das Werkstück 5' weist einen nachzubearbeitenden Kantenverlauf auf, der in einem Besäumschnitt in seinen Ausmaßen korrigiert werden soll.

Beispielhaft kommt die Düse 11A von einem vorausgehenden Laserbearbeitungsschritt, der an einem Endpunkt 41 endet. Von dem Endpunkt 41 ausgehend wird der Bearbeitungskopf schnell zur Sicherstellung eines konfliktfreien Bewegens von der Oberfläche 5A' des Werkstücks 5' wegbewegt. Ein beispielhafter Bewegungsverlauf 43A ist in Fig. 3 angedeutet. Von einem höchsten Punkt des Bewegungsverlaufs 43A wird der Bearbeitungskopf anschließend entlang des Bewegungsverlaufs 43B wieder an das Werkstück 5' angenähert, wobei das Ziel ein Eingangsbereich 25' ist, welcher sich beispielsweise in der Nähe einer später abzufahrenden Kontur 45 eines Besäumschnitts befindet. In Fig. 3 ist zur Verdeutlichung eine Projektionslinie 43' auf der Oberfläche 5A' angedeutet, die den Bewegungsverläufen 43A und 43B zugeordnet ist.

In Fig. 3 wird als Beispiel einer Rauminformation des vorbestimmten Eingangsbereichs 25' ein Kugelmittelpunkt durch einen Pfeil 47A verdeutlicht. Ein weiteres Beispiel einer Rauminformation wäre ein volumenbestimmendes Maß wie ein Kugelradius. Ein NC-Programm kann die Einstellung enthalten, dass z.B. zum Zeitpunkt des Eintretens in den Eingangsbereich 25' oder am Bezugspunkt selbst die Abstandsregelung aktiviert wird. Entsprechend wird bei der weiteren Bewegung der Bearbeitungskopf in Richtung der in Fig. 3 durch einen Pfeil 47B verdeutlichten Startposition auf den optimalen Arbeitsabstand zur Oberfläche 5A' des Werkstücks 5' abgesenkt.

In Fig. 3 ist zur Verdeutlichung eine Projektionslinie 47' auf der Oberfläche 5A' (und darüber hinaus) angedeutet, die den Bewegungsverläufen der Düse 11A vom Kugelmittelpunkt (Pfeil 47A) zur Startposition (Pfeil 47B) und weiter über die Kante 33' zu einem Umkehrpunkt (Pfeil 47C) zugeordnet ist. Man erkennt die Abnahme im Abstand (zulaufender schraffierter Bereich zwischen der Projektionslinie 47' und der durchgezogenen die Düsenbewegung verdeutlichende Linie) sowie den ab der Startposition linearen Verlauf entsprechend eines im Wesentlichen gleichbleibenden, wenn auch ungeregelten, Abstands zur Oberfläche 5A' und deren angenommenen Verlängerung.

Von der Startposition wird der Bearbeitungskopf linear in Richtung der Kante 33' und über diese hinaus verfahren, wobei z.B. beim Passieren der Startposition 47B die Abstandsregelung deaktiviert und die Abstandseinfrierung aktiviert wird. Entsprechend fährt Bearbeitungskopf quasi linear bis zum durch den Pfeil 47C verdeutlichten Umkehrpunkt weiter. Am Umkehrpunkt (oder zumindest außerhalb des Werkstücks 5') wird die Laseremission gestartet ohne primär mit dem Material des Werkstücks 5' in Wechselwirkung treten zu können. Nach der Bewegungsumkehr wird der Bearbeitungskopf wieder zurück zur Startposition unter Beibehaltung der Abstandseinfrierung geführt. Beim Überfahren der Kante 33' wird der Laserstrahl einen Schnitt ausbilden, der sich bis zur Startposition fortsetzt und ab da der Kontur 45 des vorzunehmenden Besäumschnitts folgt.

Allgemein ist die Lage des Eingangsbereichs zu einem Bezugspunkt, z.B. auch der Startposition, definiert. Die Startposition liegt beispielsweise außerhalb eines Toleranzbereichs der Werkstückkante.

Es hat sich als vorteilhaft für die Prozesssicherheit und die Zeitersparnis erwiesen, wenn der Laserbearbeitungskopf insbesondere am Startpunkt so ausgerichtet ist, dass die Laserausbreitungsrichtung parallel zu Normalen n_{S} auf die Werkstückoberfläche 5A' (in Fig. 3 als dem Pfeil 47 B entgegenlaufender Pfeil angedeutet) verläuft und die Bewegungsrichtung des Laserbearbeitungskopfes zwischen der Startposition (in Fig. 3 Pfeil 47B) und dem Umkehrpunkt (in Fig. 3 Pfeil 47C) in einer Ebene liegt, welche senkrecht zur Normalen zum Werkstück an der Startposition (in Fig. 3 Pfeil 47B) aufgespannt wird. Wird ein ebenes Werkstücks 5' angenommen (wie beispielhaft in Fig. 3 gezeigt), liegt die Bewegungsrichtung in einer Ebene parallel zur Werkstückebene durch die Startposition.

Außerdem ist es vorteilhaft, wenn der Bewegungsverlauf zwischen der Startposition und dem Umkehrpunkt derart orientiert ist, dass die zugehörige Projektionslinie (47') mit einer Normalen n_{K} zum Verlauf der Werkstückkante 33' im Schnittpunkt der Projektionslinie 47' einen Winkel α einschließt, der zwischen 0° und 45°, insbesondere zwischen 0° und 25°, liegt. Dadurch kann die Strecke auf dem Werkstück 5', welche ohne Abstandsregelung zurückgelegt wird, reduziert und im Idealfall minimiert werden.

Das Flussdiagramm der Fig. 4 verdeutlicht das Verfahren zum Anfahren einer in einem Arbeitsabstand von einer Oberfläche eines Werkstücks vorgesehenen Startposition für eine Laserbearbeitung mit einem Laserbearbeitungskopf. Beispielsweise weist der Laserbearbeitungskopf eine Abstandssensorik auf und soll in der nachfolgenden Bearbeitung beispielsweise zwei in der Nähe einer Werkstückkante des Werkstücks beginnende Konturbeschnitte des Werkstücks durchführen. Fig. 4 weist entsprechend zwei sich im Wesentlichen gleichende Abschnitte 51, 51' im Flussdiagramm auf, die für voneinander unabhängige Besäumschnitte in einem NC-Programm definiert werden können.

Jeder der Abschnitte 51, 51 'umfasst einen ersten Laseremission-freien Abschnitt 53 und einen zweiten laseremittierenden Abschnitt 55 auf.

Grundlage für den ersten Abschnitt 53 ist, dass im Schritt 53A Ortsinformation bezüglich der Startposition und Rauminformation bezüglich des vorbestimmten Eingangsbereichs bereitgestellt werden, beispielsweise von einer Datenbank ausgelesen werden. Im nachfolgenden Schritt 53B bewegt sich der Laserbearbeitungskopf durch den Eingangsbereich in Richtung des Zentrums des Eingangsbereichs und weiter zur Startposition, wobei eine Abstandsregelung z.B. nach Eintritt in den Eingangsbereich aktiviert wird. Die Bewegung des Laserbearbeitungskopfes wird im Schritt 53C vom Eingangsbereich zur Startposition fortgesetzt, wobei der Abstand des Laserbearbeitungskopfes vom Werkstück auf den Arbeitsabstand durch die Abstandsregelung angepasst wird, sodass der Laserbearbeitungskopf die Startposition im Arbeitsabstand von der Werkstückoberfläche passiert. Anschließend wird im Schritt 53D mit deaktivierter Abstandsregelung, d.h. mit eingefrorenem Abstand, die Bewegung des Arbeitskopfes zur Werkstückkante und über diese hinaus fortgesetzt.

Nach einer vorbestimmten durchlaufenen Distanz zum Werkstück erfolgt nun eine Umkehrung der Bewegungsrichtung hin zum Werkstück, sodass sich der Bearbeitungskopf im Schritt 55A zur Werkstückkante zurückbewegt und über das Werkstück in Richtung Startposition weiterbewegt. Dabei wird vor Passieren der Werkstückkante die Laseremission eingeschaltet. Zum Vervollständigen des Anfahrens der Startposition wird nun im Schritt 55B die Startposition mit dem Laserbearbeitungskopf im Arbeitsabstand unter Laseremission passiert. Dabei wird die Abstandsregelung reaktiviert und die Abstandseinfrierung deaktiviert. Im nachfolgenden Schritt 55C erfolgt die Erzeugung des Trennschnitts, beispielsweise in Form eines Konturbeschnitts des Werkstücks bis zu einem Endpunkt.

Zwischen zwei Besäumschnitten kann in einem Zwischenabschnitt 57 ein Neupositionieren des Bearbeitungskopfes vorbereitet werden. Z.B. kann nach Erreichen des Endpunktes, wie zuvor in Zusammenhang mit Fig. 3 beschrieben, zuerst ein Vergrößern des Abstandes zum Werkstück vorgenommen werden (Schritt 57A), wobei die Laseremission abgeschaltet wurde. Anschließend wird der Bearbeitungskopf in Richtung eines weiteren Eingangsbereichs bewegt (Schritt 57B), sodass bezüglich eines weiteren Trennschnitts die Abschnitte 53 und 55 erneut durchlaufen werden können.

Bei abschnittsbasierter Bearbeitung muss eine entsprechende Vorpositionierung wiederholt vorgenommen werden. Dies ist in Fig. 4 durch Wiederholung der Abschnitte 51, 51' verdeutlicht.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Verfahren zum Anfahren einer in einem Arbeitsabstand von einer Oberfläche (5A) eines Werkstücks (5) vorgesehenen Startposition (27) für eine Laserbearbeitung mit einem eine Abstandssensorik aufweisenden Laserbearbeitungskopf (11), wobei der Laserbearbeitungskopf (11) einen an einer Werkstückkante (33) des Werkstücks (5) beginnenden Konturbeschnitt des Werkstücks (5) bewirken soll, mit den Schritten:
Bereitstellen von Ortsinformation bezüglich der Startposition (27) und von Rauminformation bezüglich eines vorbestimmten Eingangsbereichs (25), der sich zumindest teilweise in einem Abstand zur Oberfläche (5A) des Werkstücks (5) erstreckt, der größer ist als der Arbeitsabstands, und der von der Startposition (27) eine Mindestentfernung aufweist, die ein Anpassen des Abstands des Laserbearbeitungskopfes (11) auf den Arbeitsabstand während eines Bewegens des Laserbearbeitungskopfes (11) von dem Eingangsbereich (25) zur Startposition (27) ermöglicht,
Bewegen des Laserbearbeitungskopfes (11) durch den Eingangsbereich (25) in Richtung Startposition (27) und Aktivieren einer auf der Abstandssensorik basierenden Abstandsregelung nach Eintritt des Laserbearbeitungskopfes (11) in den Eingangsbereich (25), und
Fortsetzen des Bewegens des Laserbearbeitungskopfes (11) vom Eingangsbereich (25) zur Startposition (27) unter Anpassung des Abstands des Laserbearbeitungskopfes (11) vom Werkstück (5) auf den Arbeitsabstand durch die Abstandsregelung,
**dadurch gekennzeichnet, dass** das Verfahren ferner die Schritte aufweist:
Fortsetzen des Bewegens des Laserbearbeitungskopfes (11) über die Werkstückkante (33) hinaus, wobei ein Deaktivieren der auf der Abstandssensorik basierenden Abstandsregelung und ein Aktivieren einer Abstandseinfrierung vor Passieren der Werkstückkante (33) durchgeführt wird,
Einschalten einer Laseremission aus dem Laserbearbeitungskopf (11),
Zurückbewegen des Laserbearbeitungskopfes (11) zur Werkstückkante (33) und über das Werkstück (5) in Richtung Startposition (27) und
Passieren der Startposition (27) mit dem Laserbearbeitungskopf (11) im Arbeitsabstand unter Laseremission, wobei ein Reaktivieren der auf der Abstandssensorik basierenden Abstandsregelung und ein Deaktivieren der Abstandseinfrierung vor dem Passieren der Startposition oder an der Startposition (27) durchgeführt werden.

2. Verfahren nach Anspruch 1, wobei das Deaktivieren der auf der Abstandssensorik basierenden Abstandsregelung und/oder ein Aktivieren einer Abstandseinfrierung an der Startposition (27) durchgeführt wird, und/oder
wobei der Laserbearbeitungskopf (11) die Startposition (27) im Arbeitsabstand passiert.

3. Verfahren nach Anspruch 1 oder 2, wobei der Eingangsbereich (25) durch eine Volumen, insbesondere eine Raumkugel um einen Bezugspunkt, insbesondere relativ zur Startposition (27), bestimmt ist und/oder wobei die Startposition (27) außerhalb des Toleranzbereichs (31) der Werkstückkante (33) liegt.

4. Verfahren nach einem der vorhergehenden Ansprüche, wobei der Eingangsbereich (25) zwischen einem Endpunkt (41) einer vorausgehenden Bearbeitung und der Startposition (27) angeordnet ist, und das Verfahren ferner die Schritte umfasst, dass der Bearbeitungskopf (11) ausgehend vom Endpunkt (41) auf seiner Bewegungsbahn zuerst in einen Sicherheitsabstand vom Werkstück (5) gefahren wird und dann in Richtung Eingangsbereich (25) abgesenkt wird.

5. Verfahren nach einem der vorhergehenden Ansprüche, wobei der Eingangsbereich (25) und insbesondere auch die Startposition (27) außerhalb eines Toleranzbereichs (31) der Werkstückkante (33) angeordnet sind, und/oder so angeordnet sind, dass auf der Strecke vom Eingangsbereich (25) zur Startposition (27) eine Einsetzbarkeit der Abstandsregelung gewährleistet wird.

6. Verfahren nach einem der vorhergehenden Ansprüche, wobei die Bewegung im Bereich der Kante (33), insbesondere zwischen Startposition (27) und Kante (33) sowie außerhalb der Kante (33), inkrementell erfolgt und/oder wobei nach Deaktivieren und vor Aktiveren der Abstandsregelung die Bewegung hin zu einem Umkehrpunkt (29) und zurück vom Umkehrpunkt (29) linear aus der vorgehenden abstandsgeregelten Bewegung extrapoliert wird.

7. Verfahren nach einem der vorhergehenden Ansprüche, wobei am Startpunkt (27, 47B) der Laserbearbeitungskopf (11) so ausgerichtet ist, dass die Laserausbreitungsrichtung der Normalen (ns) zum Werkstück an der Startposition (27, 47B) entspricht, und/oder
die Bewegungsrichtung des Laserbearbeitungskopfes (11) zwischen der Startposition (27, 47B) und dem Umkehrpunkt (29, 47C) in einer Ebene liegt, welche senkrecht zur Normalen (ns) zum Werkstück (5, 5') an der Startposition (27, 47B) aufgespannt wird.

8. Verfahren nach einem der vorhergehenden Ansprüche, wobei eine einem Bewegungssegments (35C, 35D) zwischen der Startposition (27, 47B) und dem Umkehrpunkt (29, 47C) zugehörige Projektionslinie (47') auf der Werkstückoberfläche (5A, 5A')bezüglich einer Normaler zur Werkstückkante (33, 33') im Schnittpunkt der Projektionslinie (47') mit der Kante (33') einen Winkel (a) einschließt, der zwischen 0° und 45°, insbesondere zwischen 25° und 0°, liegt.

9. Werkzeugmaschine (1) mit
einer Laserbearbeitungsanlage (3) mit einem Lasersystem,
einer Werkstückhalterung (13),
einem eine Abstandssensorik aufweisenden Laserbearbeitungskopf (11), wobei der Laserbearbeitungskopf (11) mit dem Lasersystem optisch verbunden ist und eine Relativbewegung zwischen dem Laserbearbeitungskopf (11) und der Werkstückhalterung (13) zur Durchführung eines an einer Werkstückkante (33) des Werkstücks (5) beginnenden Konturbeschnitts (21) des Werkstücks (5) bewirkbar ist, und
einer Steuerungseinheit (5), die zur Durchführung eines Verfahrens zum Anfahren einer in einem Arbeitsabstand von einer Oberfläche eines Werkstücks (5) vorgesehenen Startposition (27) für eine Laserbearbeitung mit dem Laserbearbeitungskopf (11) nach einem der vorhergehenden Ansprüche eingerichtet ist.

10. Werkzeugmaschine (1) nach Anspruch 9, ferner mit
einer Eingabevorrichtung (5), die zur Eingabe von Ortsinformation bezüglich der Startposition (27) und von Rauminformation bezüglich des vorbestimmten Eingangsbereichs (25) in Abhängigkeit von der Geometrie des Werkstücks (5), dem Toleranzbereich (31) der Werkstückkante (33), der möglichen Geschwindigkeit, mit der der Bearbeitungskopf (11) relativ zum Werkstück (5) bewegbar ist, und/oder der Messgenauigkeit der Abstandssensorik eingerichtet ist, so dass sich der Eingangsbereich (25) zumindest teilweise in einem Abstand zur Oberfläche (5A) des Werkstücks (5) erstreckt, der größer ist als der Arbeitsabstands, und der von der Startposition (27) eine Mindestentfernung aufweist, die ein Anpassen des Abstands des Laserbearbeitungskopfes (11) auf den Arbeitsabstand während eines Bewegens des Laserbearbeitungskopfes (11) von dem Eingangsbereich (25) zur Startposition (27) ermöglicht.

## Claims

1. A method for approaching a starting position (27), which is provided at a working distance from a surface (5A) of a workpiece (5), for laser processing with a laser processing head (11) having a distance sensor system, wherein the laser processing head (11) should perform a contour cut of the workpiece (5), which starts at a workpiece edge (33) of the workpiece (5), the method comprising the steps:
providing position information relating to the starting position (27) and space information relating to a predetermined entrance area (25), which at least partially extends at a distance to the surface (5A) of the workpiece (5), which is larger than the working distance, and which has a minimum distance from the starting position (27), the minimum distance allowing an adaptation of the distance of the laser processing head (11) to the working distance during a movement of the laser processing head (11) from the entrance area (25) to the starting position (27),
moving the laser processing head (11) through the entrance area (25) in direction of the starting position (27) and activating a distance control, which is based on the distance sensor system, after entry of the laser processing head (11) in the entrance area (25), and
continuing the moving of the laser processing head (11) from the entrance area (25) to the starting position (27), while adapting the distance of the laser processing head (11) from the workpiece (5) to the working distance by the distance control,
**characterized in that** the method further comprises the steps:
continuing the moving of the laser processing head (11) beyond the workpiece edge (33), wherein there are performed a deactivation of the distance control, which is based on the distance sensor system, and an activation of a distance freezing prior passing the workpiece edge (33),
turning on a laser emission from the laser processing head (11),
moving the laser processing head (11) back to the workpiece edge (33) and above the workpiece (5) in direction of the starting position (27), and
passing the starting position (27) with the laser processing head (11) at the working distance under laser emission, wherein there are performed a reactivation of the distance control, which is based on the distance sensor system, and a deactivation of the distance freezing prior the passing of the starting position or at the starting position (27).

2. The method according to claim 1, wherein the deactivation of the distance control, which is based on the distance sensor system, and/or an activation of a distance freezing at the starting position (27) is performed, and/or
wherein the laser processing head (11) passes the starting position (27) at the working distance.

3. The method according to claim 1 or 2, wherein the entrance area (25) is determined by a volume, particularly by a space sphere around a reference point, in particular relative to the starting position (27), and/or wherein the starting position (27) is outside of the tolerance range (31) of the workpiece edge (33).

4. The method according to one of the preceding claims, wherein the entrance area (25) is positioned between an endpoint (41) of a preceding processing and the starting position (27), and the method further comprises the steps that the processing head (11) is moved starting from the endpoint (41) of its trajectory first at a safety distance from the workpiece (5) and then is lowered in direction of the entrance area (25).

5. The method according to one of the preceding claims, wherein the entrance area (25) and in particular also the starting position (27) are positioned outside of a tolerance range (31) of the workpiece edge (33), and/or are arranged such that along the stretch from the entrance area (25) to the starting position (27) a usability of the distance control is ensured.

6. The method according to one of the preceding claims, wherein the movement in the area of the edge (33), in particular between the starting position (27) and the edge (33) as well as outside the edge (33), is performed in increments and/or wherein after deactivation and before activation of the distance control the movement is extrapolated towards a turning point (29) and back from the turning point (29) linearly from the preceding distance controlled movement.

7. The method according to one of the preceding claims, wherein, at the starting point (27, 47B), the laser processing head (11) is aligned such that the laser propagation direction corresponds to the normal (ns) to the workpiece at the starting position (27, 47B), and/or the movement direction of the laser processing head (11) between the starting position (27, 47B) and the turning point (29, 47C) lies in a plane that is spanned orthogonally to the normal (ns) to the workpiece (5, 5') at the starting position (27, 47B).

8. The method according to one of the preceding claims, wherein a projection line (47'), which relates to a movement segment (35C, 35D) between the starting position (27, 47B) and the turning point (29, 47C), encompasses an angle (*α*) on the workpiece surface (5A, 5A') with respect to a normal to the workpiece edge (33, 33') at the intersection of the projection line (47') with the edge (33'), which lies between 0° and 45°, in particular between 25° and 0°.

9. A machine tool (1) comprising
a laser processing system (3) with a laser system,
a workpiece mount (13),
a laser processing head (11) with a distance sensor system, wherein the laser processing head (11) is optically coupled to the laser system and a relative movement between the laser processing head (11) and the workpiece mount (13) can be performed for performing a contour cut (21) of the workpiece (5), the contour cut beginning at a workpiece edge (33) of the workpiece (5), and
a control unit (5) that is adapted for performing a method for approaching of a starting position (27), which is provided at a working distance from a surface of a workpiece (5), for laser processing with the laser processing head (11) according to one of the preceding claims.

10. The machine tool (1) according to claim 9, further comprising
an input device (5) that is adapted for inputting local information relative to the starting position (27) and space information relating to the predetermined entrance area (25) in dependence of the geometry of the workpiece (5), the tolerance range (31) of the workpiece edge (33), the possible speed, with which the processing head (11) is movable relative to the workpiece (5), and/or the accuracy of the measurement of the distance sensor system, so that the entrance area (25) at least partly extends in a distance to the surface (5A) of the workpiece (5), which is larger than the working distance, and that has a minimum distance from the starting position (27), which allows an adaptation of the distance of the laser processing head (11) to the working distance during a movement of the laser processing head (11) from the entrance area (25) to the starting position (27).

## Revendications

1. Procédé d'approche d'une position de départ (27) prévue dans une distance de travail d'une surface (5A) d'une pièce (5) pour un usinage au laser avec une tête d'usinage au laser (11) comportant un système de détection de distance, sachant que la tête d'usinage au laser (11) doit déclencher une découpe de profil de la pièce (5) commençant sur un bord de pièce (33) de la pièce (5), avec les étapes de :
préparation d'une information d'emplacement concernant la position de départ (27) et d'une information d'espace concernant une zone d'entrée prédéfinie (25), qui s'étend au moins en partie dans une distance par rapport à la surface (5A) de la pièce (5), qui est plus grande que la distance de travail et qui comporte un éloignement minimum de la position de départ (27), qui permet une adaptation de la distance de la tête d'usinage au laser (11) à la distance de travail, pendant un déplacement de la tête d'usinage au laser (11) de la zone d'entrée (25) à la position de départ (27),
déplacement de la tête d'usinage au laser (11) à travers la zone d'entrée (25) en direction de la position de départ (27) et activation d'un réglage de distance basé sur le système de détection de distance après entrée de la tête d'usinage au laser (11) dans la zone d'entrée (25), et
poursuite du déplacement de la tête d'usinage au laser (11) de la zone d'entrée (25) à la position de départ (27) en adaptant la distance de la tête d'usinage au laser (11) depuis la pièce (5) à la distance de travail par le réglage de la distance,
**caractérisé en ce que** le procédé comporte en plus les étapes de :
poursuite du déplacement de la tête d'usinage au laser (11) au-delà du bord de pièce (33), sachant qu'une désactivation du réglage de distance basée sur le système de détection de distance et une activation d'un blocage de distance sont exécutées avant ajustage du bord de pièce (33),
mise en marche d'une émission de laser depuis la tête d'usinage au laser (11),
retour de la tête d'usinage au laser (11) vers le bord de pièce (33) et sur la pièce (5) en direction de la position de départ (27) et
ajustage de la position de départ (27) avec la tête d'usinage au laser (11) dans la distance de travail avec émission de laser, sachant qu'une réactivation du réglage de distance basée sur le système de détection de distance et une désactivation du blocage de distance avant l'ajustage de la position de départ ou à la position de départ (27) sont exécutées.

2. Procédé selon la revendication 1, sachant que la désactivation du réglage de distance basé sur le système de détection de distance et/ou une activation d'un blocage de distance à la position de départ (27) est exécutée et/ou
sachant que la tête d'usinage au laser (11) ajuste la position de départ (27) dans la distance de travail.

3. Procédé selon la revendication 1 ou 2, sachant que la zone d'entrée (25) est déterminée par un volume, en particulier une sphère spatiale autour d'un point de référence, en particulier par rapport à la position de départ (27) et/ou sachant que la position de départ (27) se situe en dehors de la zone de tolérance (31) du bord de la pièce (33).

4. Procédé selon l'une quelconque des revendications précédentes, sachant que la zone d'entrée (25) est disposée entre un point extrême (41) d'un usinage précédent et la position de départ (27) et le procédé comprend en plus les étapes au cours desquelles la tête d'usinage (11) est déplacée en partant du point extrême (41) sur sa trajectoire de déplacement d'abord dans une distance de sécurité depuis la pièce (5) et est ensuite abaissée en direction de la zone d'entrée (25).

5. Procédé selon l'une quelconque des revendications précédentes, sachant que la zone d'entrée (25) et en particulier également la position de départ (27) sont disposées en dehors d'une zone de tolérance (31) du bord de pièce (33) et/ou sont disposées de telle manière qu'une possibilité de mise en œuvre du réglage de distance est assurée sur le parcours allant de la zone d'entrée (25) à la position de départ (27).

6. Procédé selon l'une quelconque des revendications précédentes, sachant que le déplacement dans la zone du bord (33), en particulier entre la position de départ (27) et le bord (33) ainsi qu'en dehors du bord (33) a lieu de façon progressive et/ou sachant qu'après désactivation et avant activation du réglage de distance, le déplacement vers un point d'inversion (29) et le retour du point d'inversion (29) sont extrapolés de façon linéaire à partir du déplacement à distance réglée précédent.

7. Procédé selon l'une quelconque des revendications précédentes, sachant que la tête d'usinage au laser (11) est orientée au point de départ (27, 47B) de telle manière que la direction de propagation du laser correspond à la normale (nₛ) par rapport à la pièce à la position de départ (27, 47B) et/ou la direction de déplacement de la tête d'usinage au laser (11) se situe entre la position de départ (27, 47B) et le point d'inversion (29, 47C) dans un plan, lequel s'étend perpendiculairement à la normale (n_{S}) par rapport à la pièce (5, 5') à la position de départ (27, 47B).

8. Procédé selon l'une quelconque des revendications précédentes, sachant qu'une ligne de projection (47') appartenant à un segment de déplacement (35C, 35D) entre la position de départ (27, 47B) et le point d'inversion (29, 47C) forme un angle (α) sur la surface de pièce (5A, 5A') concernant une perpendiculaire au bord de pièce (33, 33') au point d'intersection de la ligne de projection (47') avec le bord (33'), qui se situe entre 0° et 45°, en particulier entre 25° et 0°.

9. Machine-outil (1) avec
une installation d'usinage au laser (3) avec un système laser,
un porte-pièce (13),
une tête d'usinage au laser (11) comportant un système de détection de distance, sachant que la tête d'usinage (11) est reliée de façon optique au système laser et qu'un déplacement relatif entre la tête d'usinage au laser (11) et le porte-pièce (13) peut être activé pour exécuter une découpe de profil (21) de la pièce (5) commençant sur un bord de pièce (33) de la pièce (5), et
une unité de commande (5), qui est agencée pour exécuter un procédé d'approche d'une position de départ (27) prévue dans une distance de travail d'une surface d'une pièce (5) pour un usinage au laser avec la tête d'usinage au laser (11) selon l'une quelconque des revendications précédentes.

10. Machine-outil (1) selon la revendication (9), en plus avec
un dispositif d'entrée (5) qui est agencé pour introduire une information d'emplacement concernant la position de départ (27) et une information d'espace concernant la zone d'entrée prédéfinie (25) en fonction de la géométrie de la pièce (5), de la zone de tolérance (31) du bord de pièce (33), de la vitesse possible, à laquelle la tête d'usinage (11) peut être déplacée par rapport à la pièce (5) et/ou en fonction de la précision de mesure du système de détection de distance de telle manière que la zone d'entrée (25) s'étend au moins en partie dans une distance par rapport à la surface (5A) de la pièce (5) qui est plus grande que la distance de travail et qui comporte un éloignement minimum depuis la position de départ (27) qui permet une adaptation de la distance de la tête d'usinage au laser (11) à la distance de travail, pendant un déplacement de la tête d'usinage au laser (11) de la zone d'entrée (25) à la position de départ (27).
